# EUROPÄISCHE PATENTANMELDUNG

(11) **EP 3 584 543 A1**
(43) Veröffentlichungstag der Anmeldung: **25.12.2019**
(21) Anmeldenummer: 19176909.0
(22) Anmeldetag: 09.01.2008
(51) Int. Cl.: G01D 5/48, G01D 11/30, B60R 21/01

(54) **UNFALLSENSOR**

(30) Priorität: 23.02.2007 DE 102007008862
(62) Teilanmeldung aus: 08701352.0
(71) Anmelder: Robert Bosch GmbH, 70442 Stuttgart (DE)
(72) Erfinder: Brandt, Tobby, 71034 Boeblingen (DE); Ohl, Christian, 72793 Pfullingen (DE); Adam, Boris, 71126 Gaeufelden (DE); Schuerer, Martin, 72768 Reutlingen (DE)

(57) **Zusammenfassung**

Es wird ein Unfallsensor mit Befestigungsmitteln für ein Fahrzeug vorgeschlagen, wobei zur Befestigung des Unfallsensors die Befestigungsmittel ein Einführen in eine Öffnung in eine Wand und ein Drehen bis zu einer durch einen Anschlag definierten Endposition ermöglichen, wobei die Befestigungsmittel in der Endposition ein Zurückdrehen des Unfallsensors verhindern.

## Beschreibung

### Stand der Technik

Die Erfindung betrifft einen Unfallsensor nach der Gattung des unabhängigen Patentanspruchs.

Aus DE 199 23 985 A1 ist eine Sensorbaugruppe bekannt, bei der das Gehäuse eines Luftdrucksensors, der zur Seitenaufprallsensierung verwendet wird, über Befestigungsmittel, beispielsweise Schrauben, an einer Wand im Fahrzeug befestigt wird. Auch DE 101 06 311 A1 lehrt, dass ein Luftdrucksensor in der Tür an einer Trennwand zwischen Nassraum und Trockenraum in der Tür eingebaut wird. Dabei ragt ein Druckkanal in den Nassraum hinein, während der Luftdrucksensor sich im Trockenraum befindet. Es ist ein Dichtkissen vorgesehen, dass das Gehäuseinnere gegen den Drucksensor abdichtet und auch das Gehäuse gegen die Trennwand.

### Offenbarung der Erfindung

Der erfindungsgemäße Unfallsensor mit den Merkmalen des unabhängigen Patentanspruchs hat demgegenüber den Vorteil, dass Befestigungsmittel vorgesehen sind, die ein Einführen durch eine Öffnung in der Wand ermöglichen und dann ein Drehen bis zu einem bestimmten Anschlag, der damit die Endposition definiert. In der Endposition sind die Befestigungsmittel derart konfiguriert, dass ein Zurückdrehen des Unfallsensors verhindert wird und damit ein fester Einbau ermöglicht wird. Durch diese Konfiguration können teure Schraubverbindungen vermieden werden. Der Unfallsensor ist in der Endposition bestimmungsgemäß befestigt.

Diese Befestigungsmittel ermöglichen einen sehr einfachen und einen gleichzeitig sicheren Einbau des Unfallsensors. Auch können zusätzliche Verbauabsicherungen entfallen. Solche Verbauabsicherungen wären eine Drehmomentüberwachung, optische Kontrollen der Nieten und ähnliches. Es ist insbesondere eine Einhandmontage möglich, da kein Werkzeug mit der anderen Hand benutzt werden muss.

Der Unfallsensor ist insbesondere, wie im Stand der Technik angegeben, ein Luftdrucksensor, es kann sich jedoch auch um einen Beschleunigungssensor, eine Umfeldsensorik oder eine Körperschallsensorik handeln.

Die Befestigungsmittel sind gemäß den Merkmalen von Patentanspruch 1 definiert. Sie müssen das Einführen des Unfallsensors durch die Öffnung in der Wand ermöglichen und dann das Drehen, den Anschlag und das Verhindern des Zurückdrehens aus der Endposition heraus. Beispiele für solche Befestigungsmittel sind beispielsweise ein modifizierter Bajonettverschluss, der ein Zurückdrehen verhindert.

Unter einem Anschlag ist eine mechanische Struktur zu verstehen, die es verhindert, dass der Unfallsensor weiter gedreht werden kann.

Durch die in den abhängigen Ansprüchen angegebenen Maßnahmen und Weiterbildungen sind vorteilhafte Verbesserungen des im unabhängigen Patentanspruch angegebenen Unfallsensors möglich.

Besonders vorteilhaft ist, dass die Befestigungsmittel eine mechanische Codierung aufweisen, die das Einführen des Unfallsensors in einer einzigen Winkellage erlauben. Dadurch ist der Unfallsensor dann schon für das Drehen richtig orientiert. Diese mechanische Codierung kann durch eine entsprechende Formung der Befestigungsmittel erreicht werden. Dafür können beispielsweise Halteflügel verwendet werden, die auch die Funktion aufweisen, den Drucksensor im eingebauten Zustand, also in der Endposition, zu halten. Dabei können insbesondere zwei Halteflügel vorgesehen sein, und diese beiden Halteflügel sind dann unterschiedlich geformt, beispielsweise mit unterschiedlichen Breiten versehen. Anstatt von Halteflügeln können jedoch auch andere Strukturen verwendet werden.

Der Unfallsensor weist insbesondere Dichtmittel auf, beispielsweise einen Dichtring, der die Öffnung dann zusätzlich abdichtet. Dies ist insbesondere dann von Vorteil, wenn sich der Luftdrucksensor selbst im Nassraum befindet und die Öffnung in den Trockenraum führt.

Die Dichtmittel können vorzugsweise bezüglich ihrer Härte und/oder ihrer Form zur Aufnahme der Haltekraft konfiguriert sein, um mit den Halteflügeln dann eine optimale Kraftverteilung auf beiden Seiten der Wand in der Fahrzeugtür zu erreichen. Die Härte kann beispielsweise durch entsprechende Weichmacher eingestellt werden. Bei Silikonen, die als Dichtringmaterial verwendet werden, können verschiedene Härtegrade eingestellt werden. Dies ist durch den sogenannten Shore-Index gekennzeichnet. Bezüglich der Formung der Dichtmittel können beispielsweise Dichtringe spitz oder breit ausgeführt sein, um somit mehr oder weniger Kraft aufnehmen zu können.

Die Befestigungsmittel können wenigstens eine mechanische Rippe aufweisen, die ein Drehen des Unfallsensors nur in einer Richtung nach dem Einführen ermöglicht. Eine solche Rippe ist beispielsweise halbkreisförmig gebildet und ermöglicht so, dass eine Lasche, die letztlich in der Endposition zum Einrasten führt, nur in einer Richtung gedreht werden kann, da die Lasche ansonsten gegen die Rippe stoßen würde. Diese Lasche ermöglicht vorzugsweise in der Endposition ein Einrasten, beispielsweise unter Einwirkung einer Federkraft, deren Rückstellkraft die Lasche in der Endposition festhält. Damit wird dann ein Zurückdrehen des Unfallsensors aus dieser Endposition verhindert.

Vorteilhafterweise ist der Unfallsensor derart geformt, dass er mit Strukturen der Wand es nur ermöglicht, die Kabel an den Unfallsensor anzuschließen, wenn der Unfallsensor seine Endposition erreicht hat. Dies kann beispielsweise durch einen Falz in der Wand, die beispielsweise aus Blech gebildet ist, erreicht werden, sodass der Falz verhindert, dass ein Anschließen des Kabels in einer anderen Position als der Endposition möglich ist.

Vorteilhafterweise ist es möglich, dass der Unfallsensor eine Markierung aufweist, die ein Erkennen der Endposition ermöglicht. Diese Markierung kann beispielsweise durch eine Bohrung in der Wand nur in der Endposition für einen Monteur erkennbar sein. Diese optische Markierung kann im Boden des Sensors vorgesehen werden, beispielsweise innerhalb des durch die Dichtmittel abgedichteten Bereichs.

Der Falz kann typischerweise im Türblech eingeprägt werden, sodass er mechanisch verhindert, dass der Stecker auf den Sensor gesteckt werden kann, solange dieser nicht in die Endposition gedreht wird.

Weiter ist es möglich, eine zusätzliche Befestigungslasche am Sensor vorzusehen, falls der sichere Verbau im Fahrzeug über beispielsweise eine zusätzliche Schraube oder Niet abgesichert werden soll. Die zusätzliche Sicherung per Schraube erlaubt über beispielsweise eine Überwachung und Aufzeichnung des Drehmoments auch die elektronische Rückverfolgbarkeit des korrekten Verbaus im Fahrzeug.

Zusammengefasst ist es daher möglich, dass der erfindungsgemäße Unfallsensor nach seinen Ausprägungen gemäß der abhängigen Ansprüche folgende Kriterien erfüllt:
1. Der Unfallsensor darf nur in einer einzigen Winkellage in die Öffnung der Wand einführbar sein.
2. Der Unfallsensor kann nur in einer Richtung nach dem Einführen gedreht werden.
3. In der Endposition muss ein Anschlag ein Überdrehen verhindern.
4. Der Unfallsensor muss beim Erreichen der Endposition hörbar einrasten. Das akustische Signal wird dabei durch einen geeignet ausgelegten Klips verursacht.
5. Der Unfallsensor kann vorteilhafterweise so ausgelegt sein, dass er sich nicht beziehungsweise nur mit Beschädigungen wieder lösen lässt, wenn er einmal die Endposition erreicht hat.
6. Der Unfallsensor sowie die Befestigungsmittel sollten so ausgelegt sein, dass der Unfallsensor nur mit Kabeln beziehungsweise Gegenstecker kontaktierbar ist, wenn er seine Endposition erreicht hat.
7. Der Unfallsensor kann über eine zusätzliche Sicherungslasche verfügen, die eine zusätzliche Verschraubung ermöglicht.

Die Lasche des Unfallsensors, die in der Endposition einrastet, ist als Klipslasche ausgebildet. Dieser Klips stellt dann sicher, dass der Unfallsensor nicht mehr aus der Endposition herausgedreht werden kann beziehungsweise nur herausdreht werden kann, wenn dabei der Klips zerstört wird.

Ausführungsbeispiele der Erfindung sind in der Zeichnung dargestellt und werden in der nachfolgenden Beschreibung näher erläutert.

Es zeigen:
- Figur 1: eine Aufsicht auf den erfindungsgemäßen Unfallsensor,
- Figur 2: eine Ansicht der Wand mit der Öffnung und dem Falz,
- Figur 3a bis c: die Montage des Unfallsensors,
- Figur 4a bis f: ebenfalls Montageschritte des Unfallsensors,
- Figur 5: eine Seitenansicht des montierten Unfallsensors und
- Figur 6: eine weitere Seitenansicht des montierten Unfallsensors.

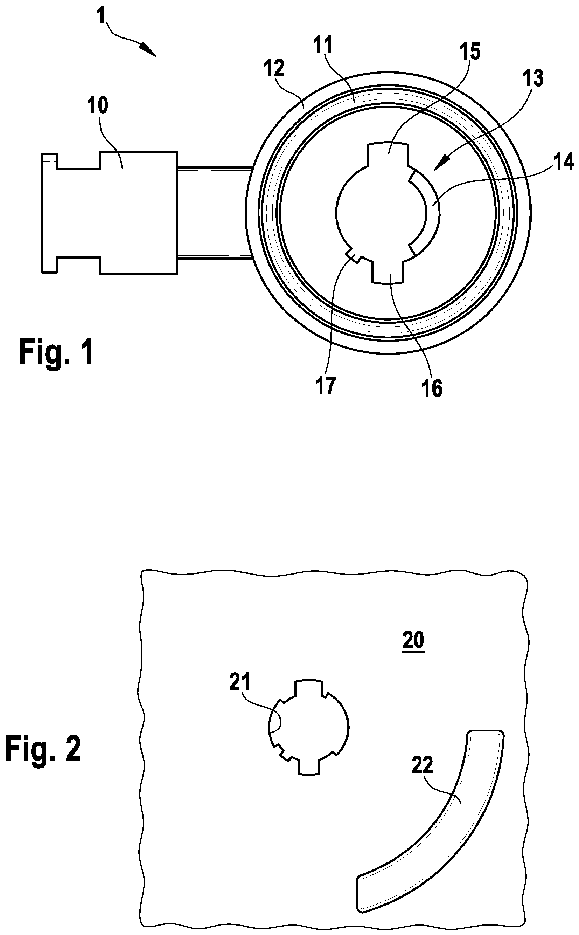

Figur 1 zeigt eine Draufsicht auf den erfindungsgemäßen Unfallsensor 1, der vorliegend als Luftdrucksensor zur Seitenaufprallerkennung beschrieben wird. Alternativ sind, wie oben angegeben, andere Unfallsensortypen möglich. Der Unfallsensor 1 weist einen Steckerteil 10 auf und einen Hauptkörper 12, in dem sich das Drucksensorelement und eine angeschlossene Elektronik befinden. Vorliegend ist die Seite im Nassraum gezeigt, die die Befestigungsmittel aufweist. Die Befestigungsmittel sind innerhalb eines Dichtrings 11 aus den Dichtmitteln vorgesehen. Der Dichtring 11 ist hier als Ring vorgesehen. Es ist möglich, auch eine rechteckige Dichtung vorzusehen oder andere geeignete Formen. Die Befestigungsmittel weisen hier eine Scheibe 13 mit Halteflügeln 15 und 16 auf, wobei der Halteflügel 15 erheblich breiter als der Halteflügel 16 ist. Weiterhin ist eine mechanische Rippe 14 zu sehen, die verhindert, dass der Unfallsensor beim Einbau in eine falsche Richtung gedreht wird. Darüber hinaus ist eine Lasche 17 angegeben, die in der Endposition einrasten wird und so ein Zurückdrehen des Unfallsensors verhindert. Die Halteflügel 15 und 16 sind unterschiedlich geformt, um eine mechanische Codierung vorzugeben, sodass der Luftdrucksensor 1 nur in einer bestimmten Winkellage in die Wand durch die Öffnung eingeführt werden kann, da die Öffnung in der Wand dieser Formung der Halteflügel entspricht. Die Befestigungsmittel sind vorliegend aus Kunststoff gefertigt. Der Dichtring 11 ist, wie oben angegeben, aus Silikon ausgebildet. Andere Kunststoffe sind möglich. Der Hauptkörper 12 des Luftdrucksensors ist metallisch, wobei auch hier Kunststoffe verwendet werden können.

Figur 2 zeigt eine Ansicht der Wand 20 mit einer Öffnung 21 und einem Falz 22, der in die Wand aus Blech eingeprägt ist. Die Öffnung 21 ist bezüglich ihrer Formung den Befestigungsmitteln 13 bis 17 nachgeformt, sodass der Drucksensor 1 mit den Befestigungsmitteln 13 bis 17 nur in einer bestimmten Winkellage durch die Öffnung 21 hindurchgeführt werden kann. Der Drucksensor 1 wird dabei gegen die Wand 20 gedrückt, beispielsweise durch Anpressen der Dichtung 11. Der eingeprägte Falz 22 verhindert, dass elektrische Kabel an den Stecker 10 angeschlossen werden können, solange der Drucksensor 1 noch nicht die Endposition erreicht hat.

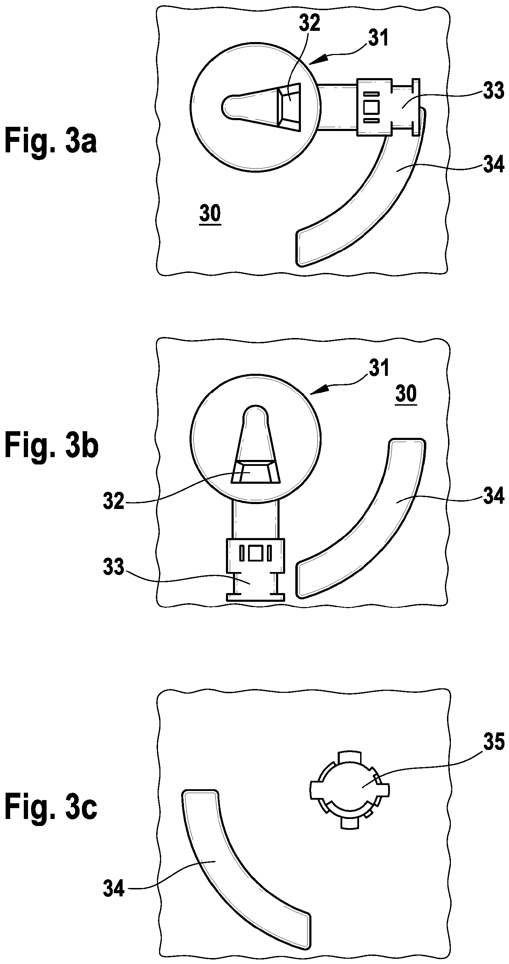

Die Figuren 3a bis c zeigen den Einbau des erfindungsgemäßen Unfallsensors. In Figur 3a ist gezeigt, wie der Sensor durch die Öffnung in der Wand 30 hindurchgeführt wird. Dargestellt ist hier die Betrachtung von der Nassraumseite, in der sich der Drucksensor beispielhaft befindet. Der Drucksensor weist ein Steckerteil 33, einen Druckeinlasskanal 32 und einen Körper 31 auf. Dargestellt ist hier auch der Falz 34, der verhindert, dass Kabel in dieser Einbauposition angeschlossen werden können.

In Figur 3b, die die gleichen Elemente mit den gleichen Bezugszeichen darstellt, hat der Sensor nunmehr die Endposition erreicht und damit auch den Falz 34 verlassen, sodass die Kabel angeschlossen werden können. Es ist eine Drehung um 90 Grad erfolgt.

Figur 3c zeigt die Ansicht vom Trockenraum und wie die Befestigungsmittel 35 die Öffnung ausfüllen.

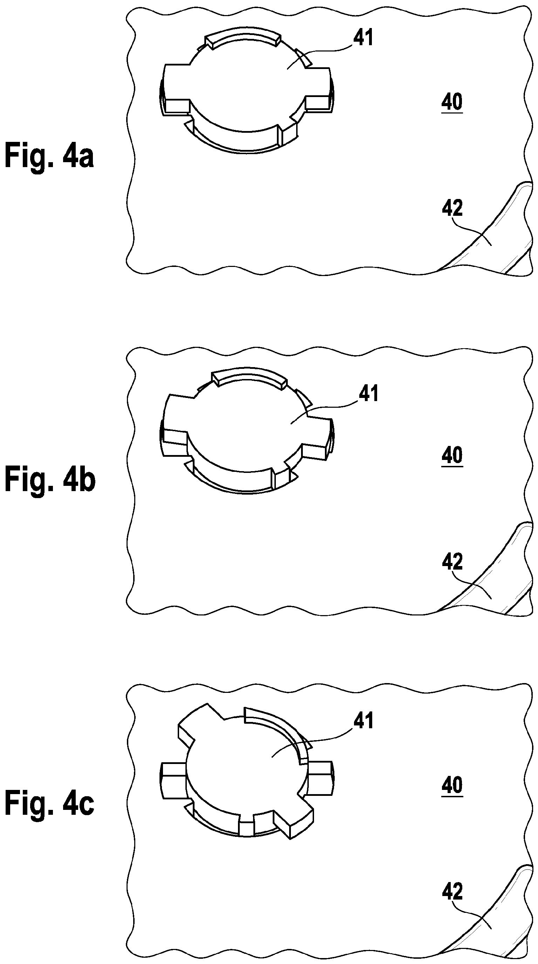

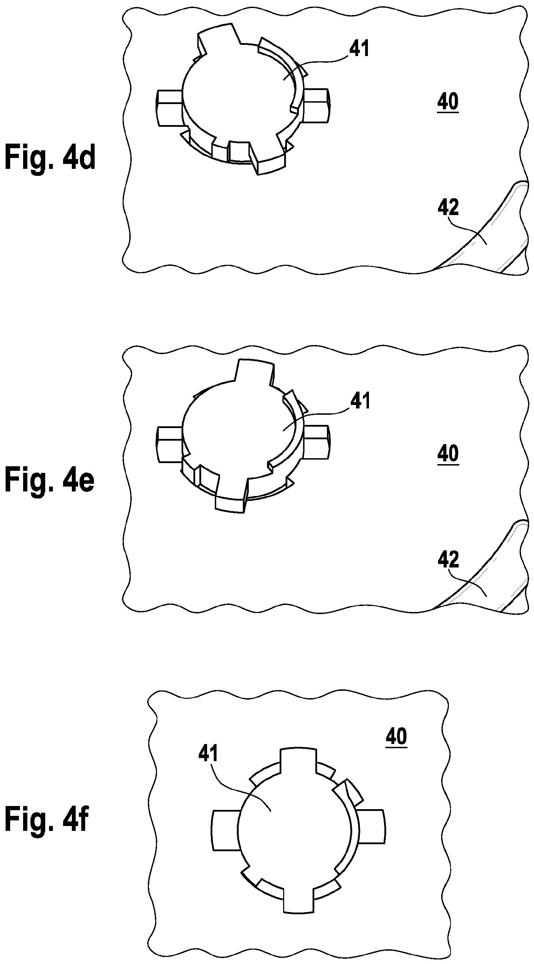

Figuren 4a bis f zeigen die verschiedenen Schritte beim Einbau des Unfallsensors von der Trockenraumseite. Auch hier sind gleiche Elemente mit gleichen Bezugszeichen bezeichnet.

Figur 4a zeigt, wie die Befestigungsmittel 41 durch die Wand 40 geführt wurden. Ausschnittsmäßig ist der Falz 42 zu sehen. In Figur 4b wird der Sensor 41 gedreht und zwar mit dem Uhrzeigersinn. In den Figuren c, d und e ist schrittweise das Drehen zu sehen, bis die Endposition in Figur 4e erreicht wurde. Fig. 4f zeigt in senkrechter Aufsicht ebenfalls den Unfallsensor von der Blechrückseite im verrasteten Zustand.

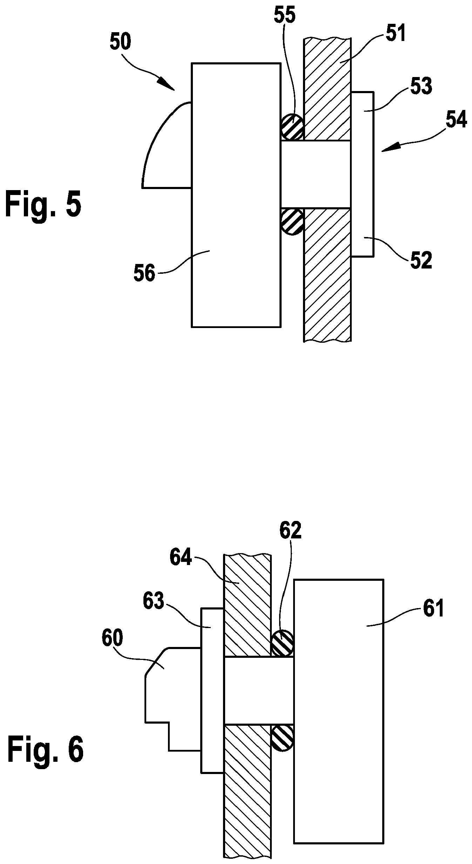

Figur 5 zeigt eine erste Ausführungsform des erfindungsgemäßen Unfallsensors in einer Seitenansicht. Dabei ist der Unfallsensor mit dem Hauptkörper 50 und dem Steckerteil 56 im Nassraum angeordnet. Die Dichtung 55 dichtet die Öffnung durch die Wand 51 gegen den Nassraum ab. Die Befestigungsmittel mit den Halteflügeln 52 und 53, hier mit 54 bezeichnet, halten den Sensor an der Wand 51. Aber auch die Dichtmittel 55, hier als Dichtring ausgebildet, nehmen einen Teil der Kraft, wie oben beschrieben, auf.

Figur 6 zeigt eine Alternative. Nunmehr sind die Befestigungsmittel 63 auf der Nassraumseite mit der Druckkanalvorrichtung 60 des Luftdrucksensors. Die Dichtung 62 ist nunmehr auf der Trockenraumseite und dichtet die Öffnung in der Wand 64 gegen den Trockenraum ab. Der Hauptkörper 61 des Luftdrucksensors befindet sich im Trockenraum. Dort erfolgt dann auch der Anschluss an die Kabel.

Befindet sich der Steckerteil des Luftdrucksensors im Nassraum, dann werden die Kabel dort auch angeschlossen, aber durch Durchführungen, die in der Wand in der Tür sowieso vorgesehen sind, dann in den Trockenraum weitergeführt.

## Patentansprüche

1. Unfallsensor mit Befestigungsmitteln für ein Fahrzeug, **dadurch gekennzeichnet, dass** die Befestigungsmittel derart ausgebildet sind, dass zur Befestigung des Unfallsensors die Befestigungsmittel ein Einführen in eine Öffnung in einer Wand und ein Drehen des Unfallsensors bis zu einer durch einen Anschlag definierten Endposition ermöglichen, wobei die Befestigungsmittel in der Endposition ein Zurückdrehen des Unfalls verhindern.

2. Unfallsensor nach Anspruch 1, **dadurch gekennzeichnet, dass** die Befestigungsmittel eine mechanische Codierung aufweisen, die das Einführen des Unfallsensors in einer einzigen Winkellage erlaubt.

3. Unfallsensor nach Anspruch 2, **dadurch gekennzeichnet, dass** für die mechanische Codierung wenigstens ein Halteflügel vorgesehen ist.

4. Unfallsensor nach Anspruch 2, **dadurch gekennzeichnet, dass** zwei Halteflügel vorgesehen sind, wobei die Halteflügel unterschiedlich geformt sind.

5. Unfallsensor nach Anspruch 3 oder 4, **dadurch gekennzeichnet, dass** der wenigstens eine Halteflügel derart ausgebildet ist, dass der wenigstens eine Halteflügel den Unfallsensor im befestigten Zustand hält.

6. Unfallsensor nach einem der Ansprüche 1 bis 5, **dadurch gekennzeichnet, dass** der Unfallsensor ein Dichtmittel aufweist, das die Öffnung abdichtet.

7. Unfallsensor nach Anspruch 5 und 6, **dadurch gekennzeichnet, dass** die Dichtmittel bezüglich ihrer Härte oder ihrer Form zur Haltekraftaufnahme mit dem wenigstens einen Halteflügel konfiguriert sind.

8. Unfallsensor nach einem der vorhergehenden Ansprüche, **dadurch gekennzeichnet, dass** die Befestigungsmittel wenigstens eine mechanische Rippe aufweisen, die ein Drehen des Unfallsensors nur in einer Richtung nach dem Einführen ermöglicht.

9. Unfallsensor nach einem der vorhergehenden Ansprüche, **dadurch gekennzeichnet, dass** die Befestigungsmittel wenigstens eine Lasche aufweisen, wobei die wenigstens eine Lasche in der Endposition einrastet und so ein Zurückdrehen verhindert.

10. Unfallsensor nach einem der vorhergehenden Ansprüche, **dadurch gekennzeichnet, dass** der Unfallsensor derart geformt ist, dass der Unfallsensor nur mit Kabeln verbindbar ist, wenn der Unfallsensor in der Endposition ist.

11. Unfallsensor nach einem der vorhergehenden Ansprüche, **dadurch gekennzeichnet, dass** der Unfallsensor eine Markierung aufweist, die ein Erkennen der Endposition ermöglicht.

12. Unfallsensor nach einem der vorhergehenden Ansprüche, **dadurch gekennzeichnet, dass** der Unfallsensor über wenigstens eine Sicherungslasche verfügt, mittels der eine Befestigung durch wenigstens eine Schraube oder wenigstens eine Niet ermöglicht wird.
